# EUROPÄISCHE PATENTSCHRIFT

(11) **EP 1 424 117 B1**
(45) Veröffentlichungstag und Bekanntmachung des Hinweises auf die Patenterteilung: **01.08.2012**
(21) Anmeldenummer: 03027422.9
(22) Anmeldetag: 27.11.2003
(51) Int. Cl.: B01D 19/04, D21H 21/12

(54) **Entschäumerformulierungen**
Defoaming compositions
Compositions démoussantes

(30) Priorität: 28.11.2002 DE 10255649
(43) Veröffentlichungstag der Anmeldung: 02.06.2004
(73) Patentinhaber: Wacker Chemie AG, 81737 München (DE)
(72) Erfinder: Burger, Willibald, Dr., 84489 Burghausen (DE); Rautschek, Holger, Dr., 01612 Nünchritz (DE); Herzig, Christian, Dr., 83329 Waging (DE)
(74) Vertreter: Deffner-Lehner, Maria

(56) Entgegenhaltungen:
- EP-A- 0 663 225
- EP-A- 1 076 073
- DE-A1- 19 918 361

## Beschreibung

Die Erfindung betrifft Entschäumerformulierungen, enthaltend (A) Antischaummittel auf Basis von Siloxanen und (B) verzweigte Polyether-Polysiloxan-Copolymere, sowie deren Anwendung zum Entschäumen von, insbesondere den bei der Zellstoffherstellung anfallenden, wässrigen Medien.

In vielen flüssigen, insbesondere wässrigen Systemen, die als erwünschte oder auch unerwünschte Bestandteile,oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt.

Entschäumer auf Basis von Siloxanen werden beispielsweise nach DD-A 056 762 durch Erhitzen von hydrophiler Kieselsäure in Polydimethylsiloxanen hergestellt. Dieses Verfahren ist recht aufwendig, trotzdem ist die Wirksamkeit der so hergestellten Entschäumer nicht zufriedenstellend. Die Verteilung von hydrophobierter Kieselsäure in einem Polydimethylsiloxan, z. B. entsprechend DE-A 29 25 722, ist ein rationelleres Verfahren, die Wirksamkeit der erhaltenen Entschäumer aber ebenfalls verbesserungswürdig.

Bekannt ist ebenfalls die Verwendung von modifizierten Polyorganosiloxanen in Entschäumerzubereitungen. So wird z. B. die Verwendung von verzweigten Siloxanentschäumern in Kombination mit Polyether-Polysiloxan-Copolymeren als Entschäumer z.B. für die Zellstoffherstellung empfohlen (EP-A 341 952). Auch in Kombination mit Mineralölen als Trägeröl sollen Polyether-Polysiloxan-Copolymere einen positiven Effekt haben (US 5,523,019). Gemäß WO 98/000216 sollen als Tenside in Entschäumerformulierungen Siloxane mit Dimethyl-3-hydroxypropylpolyoxyethylenpolyoxypropylengruppen besonders geeignet sein.

In EP-A 663 225 und EP-A 1076073 werden vernetzte bzw. verzweigte Polyorganosiloxane, welche mindestens eine Polyethergruppierung tragen, als eine der beiden Komponenten einer Entschäumerformulierung beansprucht. Die Vernetzung erfolgt dabei über Alkylengruppen, über Polydimethylsiloxane oder über Polyethergruppen. Durch die Verknüpfung über Si-C Bindungen sind die Produkte hydrolysestabil.
Im Gegensatz dazu führt das in US-A 5,625,024 vorgeschlagene Verfahren auch zu Verknüpfungen über Si-O-C-Gruppen, die insbesondere in sauren oder basischen Medien nicht hydrolysestabil sind und somit im schäumenden wässrigen Medium ihre Wirksamkeit verlieren.

Die nach dem Stand der Technik hergestellten Entschäumerformulierungen weisen jedoch nicht immer eine ausreichende Wirksamkeit auf.

Die Aufgabe der Erfindung bestand deshalb darin, Entschäumerformulierungen auf der Basis von Siloxanen vorzuschlagen, welche insbesondere in stark schäumenden, heißen, alkalischen Medien, welche beispielsweise bei der Zellstoffherstellung anfallen, eine verbesserte Wirksamkeit aufweisen.

Diese Aufgabe wird gelöst, indem zu bekannten Antischaummitteln auf Basis von Siloxanen spezielle verzweigte Polyether-Polysiloxan-Copolymere zugesetzt werden.

Gegenstand der Erfindung sind Entschäumerformulierungen enthaltend
(A) Antischaummittel auf der Basis von Siloxanen und
(B) verzweigte Polyether-Polysiloxan-Copolymere enthaltend Strukturelemente der Formel

   Y[-CₙH₂ₙ-(R₂SiO)ₘ-Aₚ-R₂Si-G]ₓ (I),

   wobei
   - Y: ein Rest der Formel 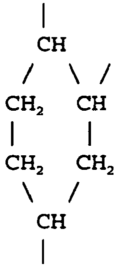 ist,
   - R: gleich oder verschieden sein kann und einen einwertigen gegebenenfalls halogenierten Kohlenwasserstoffrest mit 1 bis 18 Kohlenstoffatomen je Rest bedeutet,
   - A: einen Rest der Formel -R₂Si-R²-(R₂SiO)ₘ- bedeutet,
   wobei R² ein zweiwertiger Kohlenwasserstoffrest mit 2 bis 30 Kohlenstoffatomen, der durch ein oder mehrere voneinander separate Sauerstoffatome, vorzugsweise 1 bis 4 voneinander separate Sauerstoffatome, unterbrochen sein kann, bedeutet,
   - G: einen einwertigen Rest der Formel -C_{f}H_{2f-2k}-Z oder einen zweiwertigen Rest der Formel -CₙH₂ₙ- , wobei die zweite Bindung an einen weiteren Rest Y erfolgt, bedeutet,
   - Z: einen Rest der Formel -(R⁶)ᵥ-(OCH₂CH₂)ₐ[OCH₂CH(CH₃)]_{b}[OCH₂CH(CH₂CH₃)]_{c}-OR³,
   wobei R³ ein Wasserstoffatom oder einen Kohlenwasserstoffrest mit 1 bis 18 Kohlenstoffatomen oder einen Rest der Formel R-C(O)- (wobei R die oben dafür angegebene'Bedeutung hat) bedeutet,
   R⁶ einen zweiwertigen Kohlenwasserstoffrest mit 1 bis 10 Kohlenstoffatomen bedeutet und
   v 0 oder 1, vorzugsweise 1, ist, und
   a, b und c 0 oder eine ganze Zahl zwischen 1 und 1000 ist, c vorzugsweise 0 ist,
   mit der Maßgabe, dass die Summe aus (a+b+c) einen Wert von 2 bis 2000, vorzugsweise 2 bis 200, bevorzugt 2 bis 150, hat,
   x 3 ist,
   - f: eine ganze Zahl von 2 bis 12, vorzugsweise 2, ist,
   - k: 0 oder 1, vorzugsweise 0, ist,
   - n: eine ganze Zahl von 2 bis 12, vorzugsweise 2, ist,
   - m: eine ganze Zahl von mindestens 1, vorzugsweise eine ganze Zahl von 1'bis 1000, ist und
   - p: 0 oder eine ganze positive Zahl,
vorzugsweise 0 oder eine ganze Zahl von 1 bis 20, ist, mit der Maßgabe, dass die verzweigten Polyether-Polysiloxan-Copolymere durchschnittlich mindestens eine Gruppe Z enthalten.

Für die Wirksamkeit der erfindungsgemäßen Entschäumerformulierung ist das verwendete erfindungsgemäße Polyether-Polysiloxan-Copolymer (B) von ausschlaggebender Bedeutung.

Die Entschäumerformulierungen enthalten vorzugsweise 0,1 bis 75 Gew.-% , bevorzugt 0,1 bis 50 Gew.-%, besonders bevorzugt 3 bis 50 Gew.-%, der erfindungsgemäßen Polyether-Polysiloxan-Copolymere (B).

Die Herstellung der verzweigten Polyether-Polysiloxan-Copolymere (B) der allgemeinen Formel (I) erfolgt vorzugsweise indem in einem ersten Schritt
mindestens drei aliphatische Doppelbindungen aufweisende Verbindungen (1) der Formel
Y(CR¹=CH₂)ₓ
wobei Y und x die oben dafür angegebene Bedeutung haben und R¹ ein Wasserstoffatom oder einen Alkylrest mit 1 bis 10 Kohlenstoffatomen bedeutet
mit Organopolysiloxanen (2) der allgemeinen Formel
H(R₂SiO)ₘ-Aₚ-R₂SiH

wobei A, R, m und p die oben dafür angegebene Bedeutung haben, in Gegenwart von die Anlagerung von Si-gebundenem Wasserstoff an aliphatische Mehrfachbindung fördernden Katalysatoren (3), sogenanntem Hydrosilylierungskatalysator,
umgesetzt werden,
und in einem zweiten Schritt die so erhaltenen Si-gebundene Wasserstoffatome aufweisenden verzweigten Zwischenprodukte (5) mit organischen Verbindungen (4) der Formel

C_{f}H_{2f-2k-1}-Z

ausgewählt aus der Gruppe von
wenn k=0: H₂C=CR⁴-Z (4a) und
wenn k=1: R⁵C≡C-Z (4b)
wobei R⁴ und R⁵ die Bedeutung von R¹ haben,
f, k und Z die oben angegebene Bedeutung haben,
in Gegenwart von die Anlagerung von Si-gebundenem Wasserstoff an aliphatische Mehrfachbindung fördernden Katalysatoren (3), umgesetzt werden.

Bevorzugt ist k 0 und organische Verbindungen (4a) sind daher bevorzugt.

Die in den erfindungsgemäßen Entschäumerformulierungen enthaltenen Polyether-Polysiloxan-Copolymere (B) mit verzweigter Struktur enthalten grundsätzlich kettenartige Siloxanblöcke, deren Enden über jeweils eine C_{f}H_{2f}- oder C_{f}H_{2f-2}-Brücke mit den Strukturelementen Y bzw. Z verbunden sind. Je mehr Siloxanblöcke beidseitig mit Elementen Y verbunden sind, um so verzweigter sind die erzeugten Produkte. Generell sind die erfindungsgemäßen Polyether-Polysiloxan-Copolymere so aufgebaut, dass Siloxanblöcke und organische Blöcke miteinander abwechseln, wobei die Verzweigungsstrukturen und die Enden aus organischen Blöcken bestehen.
In den Polyether-Polysiloxan-Copolymeren beträgt das Verhältnis von Endgruppen Z zu Verzweigungsgruppen Y (Z/Y-Verhältnis) vorzugsweise 1,0 bis 2,0, bevorzugt 1,1 bis 1,5.

Die erfindungsgemäßen Polyether-Polysiloxan-Copolymere (B) besitzen vorzugsweise eine Viskosität von 50 bis 50 000 000 mPa·s bei 25°C, bevorzugt 500 bis 5 000 000 mPa·s bei 25°C und besonders bevorzugt 1 000 bis 1 000 000 mPa·s bei 25°C.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-,' m-, p-Tolylreste, Xylylreste und Ethylphenylreste; und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Alkylreste R¹ sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest und Decylreste, wie der n-Decylrest. Bevorzugt ist R¹ ein Wasserstoffatom.

Beispiele für Reste R² sind solche der Formel

- (CH₂)₂-

- (CH₂)₄-

-(CH₂)₆-

- (CH₂)₈-

-(CH₂)₁₀-

-C₆H₄-

-C₂H₄C₆H₄C₂H₄-

-CH₂CH(CH₃)C₆H₄CH(CH₃)CH₂-

und

- C₂H₄-Norbornandiyl-.

Beispiele für Kohlenwasserstoffreste R³ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest und Dodecylreste, wie der n-Dodecylrest; Arylreste, wie der Phenylrest; und Aralkylreste, wie der Benzylrest, der α- und der β-Phenylethylrest.
Ein Beispiel für den Rest der Formel R-C(O)- ist der Acetylrest.
Bevorzugt ist R³ ein Wasserstoffatom, ein Methyl-, ein n-Butyl- oder ein Acetylrest.

Beispiele für Reste R¹ gelten in vollem Umfang für Reste R⁴ und R⁵.
Bevorzugt ist R⁴ ein Wasserstoffatom.
Bevorzugt ist R⁵ ein Wasserstoffatom.

Beispiele für Reste R⁶ sind solche der Formel

-(CH₂)-, -(CH₂)₂-, -(CH₂)₄-, -C(CH₃)₂-,

wobei der Rest -(CH₂)- bevorzugt ist.

Im ersten Verfahrensschritt führt die Addition der SiH-Gruppe von (2) an die CH₂=CR¹-Gruppe von (1), die sogenannte Hydrosilylierung, zur dem Fachmann bekannten Bildung von zwei Isomeren wie folgt:

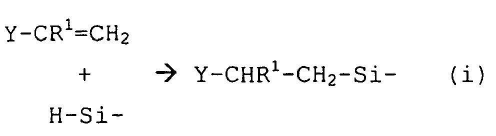

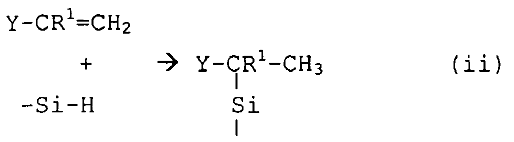

Die -CₙH₂ₙ-Gruppe in (I) der erfindungsgemäßen Organosiloxan(co)polymere umfasst diese Isomerenbildung und bedeutet daher vorzugsweise die isomeren Reste
-CHR¹-CH₂- von (i) und -CR¹-CH₃ von (ii)
und n ist daher die Gesamtzahl der C-atome in der CH₂=CR¹-Gruppe von (1). Da R¹ vorzugsweise ein Wasserstoffatom ist, ist n vorzugsweise 2.

Bei dem erfindungsgemäßen Verfahren kann eine Art von Verbindung (1) oder verschiedene Arten von Verbindung (1) eingesetzt werden.

Ein Beispiel für Verbindungen (1), mit denen die erfindungsgemäßen verzweigten Polyether-Polysiloxan-Copolymere (B) herstellbar sind, ist
1,2,4-Trivinylcyclohexan.

Bei dem erfindungsgemäßen Verfahren kann eine Art von Organopolysiloxan (2) oder verschiedene Arten von Organopolysioxan (2) eingesetzt werden.

Als Organopolysiloxan (2) wird ein weitgehend lineares Polymer eingesetzt.
p ist bevorzugt 0.
m ist bevorzugt eine ganze Zahl von 5 bis 400.

Organopolysiloxan (2) wird im ersten Verfahrensschritt in solchen Mengen eingesetzt, dass das Verhältnis von Sigebundenem Wasserstoff in Organopolysiloxan (2) zu aliphatischer Doppelbindung in Verbindung (1) vorzugsweise mindestens 1,5, bevorzugt 1,5 bis 20, besonders bevorzugt 1,5 bis 5, 0, beträgt.

Da Organopolysiloxan (2) vorzugsweise im Überschuss eingesetzt wird, reagieren daher in dem ersten Verfahrensschritt alle aliphatischen Doppelbindungen in der Verbindung (1) ab, und es werden verzweigte Zwischenprodukte (5) erhalten, die Si-gebundene Wasserstoffatome aufweisen. Im Fall von niedermolekularen Organopolysiloxanen (2) mit p=0 und m=1-6 können durch die anschließende destillative Entfernung des überschüssigen Organopolysiloxans (2) Zwischenprodukte (5) praktisch frei von Organopolysiloxan (2) erhalten werden. In den übrigen Fällen wird überschüssiges Organopolysiloxan (2) vorzugsweise im Reaktionsgemisch belassen, wodurch die Zwischenprodukte (5) verdünnt werden. Um lösliche, d.h. unvernetzte, Zwischenprodukte (5) zu erhalten, wird daher vorzugsweise ein Molverhältnis von SiH in (2) zu C=C in (1) von mindestens 1,5 eingesetzt. Das erforderliche Molverhältnis hängt von der jeweiligen Struktur von (1) und dem Index x ab und kann vom Fachmann im Einzelfall durch Handversuche experimentell ermittelt werden.

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, wie Platin-1,3-Divinyl-1,1,3,3-tetra-methyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird im ersten Verfahrensschritt vorzugsweise in Mengen von 0,2 bis 20 Gew.-ppm (Gewichtsteilen je Million Gewichtsteilen), bevorzugt in Mengen von 1 bis 10 Gew.ppm, jeweils berechnet als elementares Platin und bezogen auf das Gesamtgewicht von Verbindung (1) und Organopolysiloxan (2) eingesetzt.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 40°C bis 100°C, durchgeführt.

Da die mindestens drei aliphatische Doppelbindungen aufweisende Verbindung (1), z. B. 1,2,4-Trivinylcyclohexan, bei höheren Temperaturen zur Polymerisation neigt, können bei dem ersten Verfahrensschritt vorzugsweise Radikalinhibitoren, wie 4-Methoxyphenol, 2,6-Bis(tert.butyl)-4-methylphenol, Phenothiazin, Hydrochinon oder Brenzcatechin mitverwendet werden. Die Radikalinhibitoren werden dabei vorzugsweise in Mengen von 10 bis 500 Gew.-ppm, bezogen auf das Gesamtgewicht an Verbindung (1) und Organopolysiloxan (2), eingesetzt.

In dem ersten wie auch im zweiten Verfahrensschritt können vorzugsweise inerte, organische Lösungsmittel mitverwendet werden. Beispiele für inerte, organische Lösungsmittel sind Toluol, Xylol, Octanisomere, Heptanisomere, Butylacetat, 1,2-Dimethoxyethan, Tetrahydrofuran und Cyclohexan.
Die gegebenenfalls mitverwendeten inerten organischen Lösungsmittel können nach dem ersten bzw. zweiten Verfahrensschritt destillativ entfernt werden oder im Reaktionsgemisch verbleiben.

Die organischen Verbindungen (4) enthalten aliphatische C-C-Doppel- oder Dreifachbindungen, die gegenüber Si-H-Gruppen in Hydrosilylierungsreaktionen reaktiv sind und diese unter Bildung von Si-C-Bindungen anlagern.
Wenn k=0, enthält die reaktive Gruppe eine Doppelbindung und die organische Verbindung (4) ist eine Verbindung (4a) der Formel H₂C=CR³-Z, was bevorzugt ist.
Wenn k=1, enthält die reaktive Gruppe eine Dreifachbindung und die organische Verbindung (4) ist eine Verbindung (4b) der Formel R⁴C≡C-Z.
Bei der Anlagerung der SiH-Gruppe in dem Zwischenprodukt (5) an die Doppel- oder Dreifachbindung in (4a) oder (4b) kommt es zur dem Fachmann bekanntem Bildung von Isomeren wie folgt:

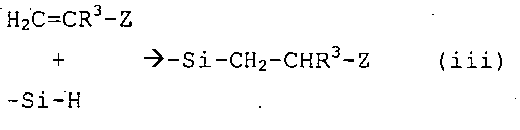

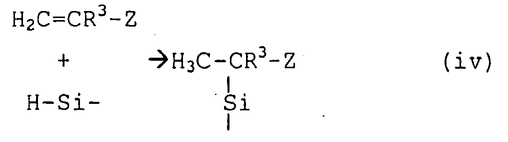

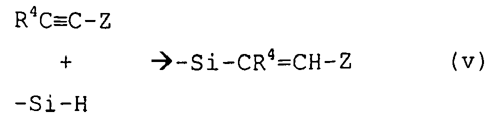

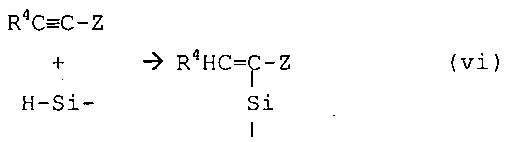

Die -C_{f}H_{2f}-₂ₖ-Gruppe in Formel (I) der erfindungsgemäßen Polyether-Polysiloxan-Copolymere (B) umfasst diese Isomerenbildung und bedeutet daher vorzugsweise die isomeren Reste

-CH₂-CHR³- von (iii)

und 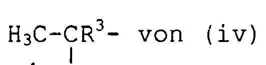 und

-CR⁴=CH- von (v)

und 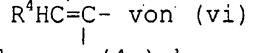 (da die organischen Verbindungen (4a) bevorzugt sind, sind die isomeren Reste (iii) und (iv) bevorzugt),
und f ist daher die Gesamtzahl der C-Atome in der H₂C=CR³-Gruppe von (4a) oder der R⁴C≡C-Gruppe von (4b).
Da R³ und R⁴ vorzugsweise Wasserstoffatome sind, ist f daher vorzugsweise 2.

Beispiele für die H₂C=CR³-Gruppe in der organischen Verbindung (4a) sind

H₂C=CH-

H₂C=C(CH₃)-

H₂C=C(C₄H₉)-

und

H₂C=C(C₈H₁₇)- .

Beispiele für die R⁴C≡C-Gruppe in der organischen Verbindung (4b) sind

HC≡C-

CH₃C≡C-

und

C₄H₉C≡C- .

Ein bevorzugtes Bespiel für die organische Verbindung (4a) ist die Verbindung der Formel

H₂C=CH-CH₂-(OCH₂CH₂)ₐ[OCH₂CH(CH₃)] _{b}[OCH₂CH(CH₂CH₃)] _{c}-OR³ ,

und für den Rest -C_{f}H_{2f-2k}-Z in (I) sind daher bevorzugt die isomeren Reste der Formel

-CH₂-CH₂-CH₂-(OCH₂CH₂)ₐ[OCH₂CH(CH₃)]_{b}[OCH₂CH(CH₂CH₃)]_{c}-OR³ ,

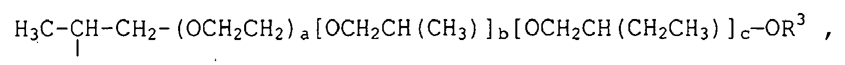

wobei a, b, c und R³ die oben dafür angegebene Bedeutung haben.

Der an die Doppel- oder Dreifachbindung gebundene Rest Z in (4a) oder (4b) ist ein Polyether. Üblicherweise werden sie durch Polymerisation von Ethylenoxid und/oder Propylenoxid und/oder Butylenoxid hergestellt, wobei die Alkylenoxideinheiten entweder statistisch verteilt oder als Blockcopolymerisate vorliegen können. Die Polyether können aus nur einem Alkylenoxid oder durch Copolymerisation aus zwei oder drei der genannten Alkylenoxide hergestellt werden. Je nach Verfahren werden dabei statistisch verteilte Copolymere oder Blockcoploymere erhalten, wobei statistisch verteilte Polyether bevorzugt sind. Die zur Herstellung der in den erfindungsgemäßen Entschäumerformulierungen enthaltenen verzweigten Polyether-Polysiloxan-Copolymere verwendeten Polyether der Formel 4a und 4b weisen mindestens zwei Polyoxyalkyleneinheiten, üblicherweise nicht mehr als 200 Polyoxyalkyleneinheiten, bevorzugt nicht mehr als 150 Polyoxyalkyleneinheiten, auf.

Im zweiten Verfahrensschritt wird die organische Verbindung (4) in solchen Mengen eingesetzt, dass das Verhältnis von aliphatischer Doppelbindung in (4a) bzw. aliphatischer Dreifachbindung in (4b) zu Si-gebundenem Wasserstoff in dem im ersten Verfahrensschritt erhaltenen Zwischenprodukt (5) bevorzugt 1,05 bis 1,5 beträgt.

Bei der Durchführung des zweiten Verfahrensschrittes ist es möglich, Verbindung (4) zum katalysierten Zwischenprodukt (5) zu dosieren oder umgekehrt. Bevorzugt ist aber die Vorlage der Verbindung (4) mit Katalysator (3), worauf das Zwischenprodukt (5) dosiert wird. Sofern die Wärmetönung dieser Hydrosilylierungsreaktion eher gering ist, wird vorteilhaft ein Gemisch aus (4) und (5) bei geeigneter Temperatur mit Katalysator (3) gestartet, wobei bei adiabatischer Fahrweise die Erwärmung des Reaktionsgemisches ein Maß für den Fortschritt der Reaktion selbst ist.

Wenn die Verbindung (4) flüchtig ist, kann die überschüssige Verbindung (4) destillativ entfernt werden, ansonsten verbleibt sie im Endprodukt.

Der Katalysator (3) wird im zweiten Verfahrensschritt vorzugsweise in Mengen von 0,5 bis 50 Gew.-ppm (Gewichtsteilen je Million Gewichtsteilen), bevorzugt in Mengen von 2 bis 20 Gew.-ppm, jeweils berechnet als elementares Platin und bezogen auf das Gesamtgewicht von organischer Verbindung (4) und im ersten Verfahrensschritt erhaltenes Zwischenprodukt (5) eingesetzt.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 40°C bis 120°C, durchgeführt.

Das erfindungsgemäße verzweigte Polyether-Polysiloxan-Copolymer (B) weist entschäumende Wirkung auf. Es ist möglich, das Polyether-Polysiloxan-Copolymer (B) allein als Entschäumer zu verwenden.

Die erfindungsgemäßen Entschäumerformulierungen enthalten bevorzugt
(A) 1 bis 90 Gew-% Antischaummittel auf Basis von Siloxanen,
(B) 0,1 bis 50 Gew.-% des verzweigten Polyether-Polysiloxan-Copolymeren der allgemeinen Formel (I),
(C) 0 bis 20 Gew.-%, vorzugsweise 2 bis 20 Gew.-% Emulgatoren,
(D) 0 bis 97 (siehe auch S. 21) Gew.-% Wasser,
   jeweils bezogen auf das Gesamtgewicht der Entschäumerformulierungen,
   und gegebenenfalls
(E) Konservierungsmittel, Verdicker und weitere Zusätze.

Als Antischaummmittel auf Basis von Siloxanen (im weiteren auch mit Siloxanentschäumer bezeichnet) wird üblicherweise eine Mischung aus Kieselsäure und Polyorganosiloxanen verwendet,
wobei die Mischung bevorzugt
(aa) 1 bis 15 Gew.-% einer in situ hydrophobierten, gefällten und/oder pyrogenen Kieselsäure mit einer BET-Oberfläche größer 50 g/m² und/oder einer vorbehandelten, hydrophoben, gefällten und/oder pyrogenen Kieselsäure mit einer BET-Oberfläche größer 50 g/m²,
(ab) 20 bis 99 Gew.-% eines oder mehrerer Polyorganosiloxane aus Einheiten der allgemeinen Formel

   R⁷ ₑ(R⁸O)_{d}SiO_{(4-e-d)/2} (II),

   worin R⁷ gleich oder verschieden sein kann und einen einwertigen, substituierten und/oder unsubstituierten gesättigten und/oder ungesättigten Kohlenwasserstoffrest mit 1 bis 30 Kohlenstoffatomen je Rest bedeutet,
   R⁸ gleich oder verschieden sein kann und ein Wasserstoffatom oder einen einwertigen, substituierten und/oder unsubstituierten gesättigten und/oder ungesättigten Kohlenwasserstoffrest mit 1 bis 30 Kohlenstoffatomen je Rest bedeutet,
   d 0, 1, 2 oder 3 ist, wobei d durchschnittlich ein Wert von kleiner als 0,5 ist,
   e 0, 1, 2 oder 3 ist,
   mit der Maßgabe, dass die Summe (d+e) < 3 ist und durchschnittlich einen Wert von 1,8 bis 2,4, aufweist,
(ac) 0 bis 10 Gew.-% eines Siliconharzes, welches im wesentlichen aus Einheiten der allgemeinen Formel R₃SiO_{1/2} und SiO_{4/2} besteht, wobei R die oben dafür angegebene Bedeutung hat, und
(ad) 0 bis 80 Gew.-% einer organischen Verbindung mit einem Siedepunkt größer als 100 °C, ausgewählt aus Mineralölen, nativen Ölen, Isoparaffinen, Polyisobutylenen, Rückständen aus der Oxoalkoholsynthese, Estern niedermolekularer synthetischer Carbonsäuren, Ethern niedermolekularer Alkohole, Phthalaten und Estern der Phosphorsäure,
wobei die Gew.-% jeweils bezogen sind auf das Gesamtgewicht des Antischaummittels, enthält.

Die in situ Hydrophobierung der Kieselsäure (aa) kann durch mehrstündiges Erhitzen der im Polyorganosiloxan (ab) dispergierten Kieselsäure auf Temperaturen von 100 bis 200 °C erfolgen. Dabei kann die Reaktion durch den Zusatz von Katalysatoren, wie KOH, und von Hydrophobiermitteln, wie kurzkettigen OH-terminierten Polydimethylsiloxanen, Silanen, Silazanen oder Siliconharzen, unterstützt werden. Als Alternative können vorbehandelte, hydrophobierte Kieselsäuren zum Einsatz kommen, oder aber auch eine Kombination von in situ hydrophobierten Kieselsäuren mit vorbehandelten hydrophobierten Kieselsäuren.

Beispiele für Reste R⁷ in der allgemeinen Formel (II) sind unsubstituierte, verzweigte oder unverzweigte Alkylreste, wie Methyl-, Ethyl-, Propyl-, Isopropyl-, Hexyl-, 2-Ethylhexyl, Octyl-, oder Dodecylreste; substituierte Alkylreste, wie Trifluorpropyl-, Cyanoethyl-, Glycidoxypropyl-, Polyalkylenglycolpropyl-, Aminopropyl- oder Aminoethylaminopropylreste; ungesättigte Reste, wie Vinyl-, Methacryloxypropyl- oder Allylreste; aromatische Reste, wie Phenyl-, Tolyl-, Xylyl-, Naphthyl-, Anthracyl- oder Benzylreste. Besonders bevorzugte Reste R⁷ sind der Methyloder Phenylrest, wobei es besonders bevorzugt ist, wenn mehr als 80 Mol-% der Reste R⁷ Methylreste sind.

Beispiele für Reste R⁸ in der allgemeinen Formel (II) sind unsubstituierte, verzweigte oder unverzweigte Alkylreste, wie Methyl-, Ethyl-, Propyl-, Isopropyl-, Hexyl-, 2-Ethylhexyl, Octyl-, oder Dodecylreste; substituierte Alkylreste, wie Trifluorpropyl-, Cyanoethyl-, Glycidoxypropyl-, Polyalkylenglycolpropyl-, Aminopropyl- oder Aminoethylaminopropylreste; ungesättigte Reste, wie Vinyl-, Methacryloxypropyl- oder Allylreste; aromatische Reste, wie Phenyl-, Tolyl-, Xylyl-, Naphthyl-, Anthracyl- oder Benzylreste.

Beispiele für Verbindungen der Formel (II) sind Polydimethylsiloxane mit Viskositäten von 100 bis 1.000.000 mPa·s bei 25°C. Diese Polydimethylsiloxane können z. B. durch den Einbau von CH₃SiO_{3/2}- oder SiO_{4/2}-Einheiten verzweigt sein. Diese verzweigten oder anvernetzten Siloxane weisen dann viskoelastische Eigenschaften auf.

Derartige verzweigte viskoelastische Polyorganosiloxane können beispielsweise erhalten werden durch Umsetzung des Dimethyldichlorsilan-Hydrolyseproduktes oder von hydroxyterminierten Polydimethylsiloxanen mit einem trimethylsilylterminierten Polydimethylsiloxan und einer Verbindung, ausgewählt aus einem Silan mit mindestens drei hydrolysierbaren Gruppen, wie Tetraethoxysilan, Methyltrimethoxysilan oder Methyltriacetoxysilan, oder einem Siliconharz, welches im wesentlichen aus (CH₃)₃SiO_{1/2}- und SiO₂-Einheiten im Verhältnis von 2 zu 1 bis 1 zu 2 aufgebaut ist, in Gegenwart eines Katalysators.

Eine weitere Variante zur Herstellung von verzweigten viskoelastischen Polyorganosiloxanen ist die Umsetzung von einem Organosiloxan X¹ mit statistisch verteilten, durchschnittlich weniger als 2 funktionellen Gruppen pro Molekül mit einem Organosiloxan X² mit statistisch verteilten, durchschnittlich mehr als 2 funktionellen Gruppen pro Molekül, wobei pro Siloxan X¹ oder X² jeweils nur eine Art an funktionellen Gruppen vorliegt, in Gegenwart eines Hydrosilylierungen fördernden Katalysators, wie beispielsweise Platin oder Platinverbindungen.

Weiterhin kann das Antischaummittel auf Basis von Siloxanen 0,1 bis 10 Gew.-%, bevorzugt 0,5 bis 5 Gew.-%, mindestens eines Polyorganosiloxans (ab') der allgemeinen Formel (II) enthalten, worin R⁷ einen Methylrest und R⁸ einen linearen und/oder verzweigten Kohlenwasserstoffrest mit mindestens 6 Kohlenstoffatomen bedeuten, d einen Wert von 0,005 bis 0,5 annimmt und die Summe (d+e) einen Wert von 1,9 bis 2,1 annimmt. Derartige Produkte sind beispielsweise durch alkalisch katalysierte Kondensation von silanolterminierten Polydimethylsiloxanen einer Viskosität 50 bis 50.000 mPa·s bei 25°C und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich.

In den erfindungsgemäßen Entschäumerformulierungen können weitere bekannte Zusätze oder Hilfsstoffe enthalten sein, beispielsweise weitere Füllstoffe, wie Aluminiumoxid, Metallseifen, hydrophobiertes Quarzmehl oder fein verteilte hydrophobe Polyurethane. Aber auch der Zusatz von als Entschäumeröle wirkenden Substanzen, wie Mineralöle, Paraffinöle, Fettsäureester, Fettalkohole und Wachse in Mengen von 1 bis 99 Gew.-%, bezogen auf das Gesamtgewicht der Formulierung, ist möglich. Weiterhin können als Verdicker bekannte Verbindungen, wie Polyacrylsäure, Polyacrylate, Celluloseether wie Carboxymethylcellulose und Hydroxyethylcellulose, natürliche Gume wie Xanthan Gum und Polyurethane, zugesetzt werden.

Das Herstellen der erfindungsgemäßen Entschäumerformulierung erfolgt nach bekannten Verfahren, beispielsweise unter Anwendung von hohen Scherkräften in Kolloidmühlen oder Rotor-Stator-Homogenisatoren. Dabei kann der Mischvorgang bei reduziertem Druck erfolgen, um das Einmischen von Luft, welche in hochdispersen Füllstoffen enthalten ist, zu verhindern.

Bevorzugt ist die Anwendung der erfindungsgemäßen Entschäumerformulierungen in Öl-in-Wasser-Emulsionen (O/W-Emulsionen). Die in den erfindungsgemäßen Entschäumerformulierungen eingesetzten speziellen Polyether-Polysiloxan-Copolymere weisen Tensideigenschaften auf, sie sind deshalb auch als Emulgatoren für die Bildung von Öl-in-Wasser-Emulsionen, ausgehend von Antischaummitteln auf der Basis von Siloxanen, geeignet. Den Entschäumerformulierungen, wenn sie als Emulsionen eingesetzt werden, können noch zusätzliche organische Emulgatoren, welche O/W-Emulsionen auf der Basis von Siloxanen bilden können, zugesetzt werden.
Die Polysiloxan-Polyether-Copolymere (B) können gemeinsam mit dem Antischaummittel (A) emulgiert werden, oder die Polysiloxan-Polyether-Copolymere (B) können aber auch einfach nach der Herstellung einer Emulsion von dem Antischaummittel (A) der Antischaummittelemulsion direkt oder in Form einer Emulsion zugesetzt werden, um eine Wirkungsverbesserung zu erzielen.

Die erfindungsgemäßen Entschäumerformulierungen in Form von O/W-Emulsionen enthalten vorzugsweise
(A) 5 bis 50 Gew.-% Antischaummittel auf Basis von Siloxanen,
(B) 0,1 bis 30 Gew.-% des Polyether-Polysiloxan-Copolymeren der allgemeinen Formel (I),
(C) 2 bis 20 Gew.-% eines Emulgators sowie
(D) 50 bis 95 Gew.-% Wasser, jeweils bezogen auf das Gesamtgewicht der Entschäumerformulierungen,
   und gegebenenfalls
(E) Konservierungsmittel, Verdicker und weitere Zusätze.

Die zur Herstellung der Emulsionen benötigten Emulgatoren können anionisch, kationisch oder nichtionogen sein und sind dem Fachmann zur Herstellung von stabilen Siliconemulsionen bekannt. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte.

Technologien zur Herstellung von Siliconemulsionen sind bekannt. Üblicherweise erfolgt die Herstellung durch einfaches Verrühren aller Bestandteile und anschließendes Homogenisieren mit Rotor-Stator-Homogenisatoren, Kolloidmühlen oder Hochdruckhomogenisatoren.

Die erfindungsgemäßen Entschäumerformulierungen sind überall dort einsetzbar, wo bei Prozessen eine störende Schaumbildung auftritt, die vermindert oder ganz beseitigt werden soll. Das ist z.B. die Anwendung in Wasch- und Reinigungsmitteln, die Bekämpfung von Schaum in Abwasseranlagen, bei Textilfärbeverfahren, bei der Erdgaswäsche, in Dispersionen und in Kohlenwasserstoffen.

Insbesondere sind die erfindungsgemäßen
Entschäumerformulierungen hervorragend zum Entschäumen von bei der Zellstoffherstellung anfallenden wässrigen Medien eimsetzbar.

### Ausführungsbeispiele

Alle im Folgenden angegebenen Teile'und Prozentsätze sind (wenn nicht anders angegeben) auf das Gewicht bezogen. Die Viskositäten beziehen sich auf 25°C.

### (A) Herstellung der Siloxanentschäumer

**A1:** 94 Teile Polydimethylsiloxan einer Viskosität von 12.500 mm²/s und 6 Teile einer hydrophilen Kieselsäure wurden mit einer Kolloidmühle (Spalt 0,6 mm) dreimal homogenisiert. Durch 10 stündiges Erhitzen der Mischung auf 190 °C wurde die Kieselsäure in situ hydrophobiert.

**A2**: 400 Teile eines hydroxyterminierten Polydimethylsiloxans einer Viskosität von 65 mm²/s, 40 Teile
trimethylsiloxyterminiertes Polydimethylsiloxan einer Viskosität von 40 mm²/s, 4 Teile Methyltrimethoxysilan und 1 Teil eines 0,5%igen Phosphornitridchloridkatalysators wurden auf 100 °C erhitzt. Im Verlauf von 20 Minuten wurde der Druck auf 35 mbar abgesenkt. Danach erfolgte die Neutralisation des Katalysators mit 0,03 Teilen Triisooctylamin. Das erhaltene Polyorganosiloxan wies eine Viskosität von 19.000 mm²/s auf. In 95 Teile dieses Öles wurden 5 Teile einer vorbehandelten hydrophoben Kieselsäure eingearbeitet und mit einer Kolloidmühle homogensiert.

**A3:** Eine Mischung aus 89,3 Teilen eines trimethylsiloxyterminierten Polydimethylsiloxans einer Viskosität von 5.000 mm²/s, 5 Teilen einer pyrogenen: hydrophilen Kieselsäure mit einer BET-Oberfläche von 300 m²/g, 0,7 Teilen einer 20%igen methanolischen KOH, 2,5 Teilen eines Siliconharzes aus 40 mol% Trimethylsiloxyeinheiten und 60 mol% SiO_{4/2}-Einheiten und 2,5 Teilen eines Siloxans, das durch Kondensation von Eicosanol mit einem hydroxyterminierten Polydimethylsiloxan einer Viskosität von 65 mm²/s hergestellt wurde, wurden 2 h auf 150 °C erhitzt. Nach Abkühlen wurde die Mischung mit einer Kolloidmühle homogenisiert.

### (B) Herstellung der Polyether-Polysiloxan-Copolymere

Herstellung des erfindungsgemäßen verzweigten Polyether-Polysiloxan-Copolymers (**Polymer 1**):

In einem Glaskolben mit mechanischem Rührer werden 108 g 1,2,4-Trivinylcyclohexan mit 1840 g eines α,ω-Dihydrogenpolydimethylsiloxans mit einem Gehalt an Aktivwasserstoff (Si-gebundener Wasserstoff) von 0,18 Gew.-% und einer Viskosität von 9 mPa.s bei 25°C gemischt und anschließend 1,9 g einer Lösung eines Platin-1,3-Divinyl-1,1,3,3-tetramethyldisiloxan-Komplexes in Dimethylpolysiloxan (sogenannter Karstedt-Katalysator) mit einem Pt-Gehalt von 1,0 Gew.-% zugegeben. Das Reaktionsgemisch erwärmt sich in wenigen Minuten auf ca. 80°C und wird ca. 1 Stunde bei dieser Temperatur gerührt. Es wird ein verzweigtes Siloxanpolymer mit einer Viskosität von 220 mm²/s bei 25°C und einem Gehalt von Aktivwasserstoff (Si-gebundener Wasserstoff) von 0,067 Gew.-% erhalten. Dem Syntheseprinzip entsprechend bestehen sämtliche freien Siloxankettenenden aus den hochreaktiven Hydrogendimethylsiloxyeinheiten.

100 g dieses Hydrogensiloxanpolymers werden in eine 100°C warme Mischung aus 226 g eines monoallylischen Polyethers mit durchschnittlich 24 Ethylenoxy- und 25 Propylenoxygruppen der Formel

CH₂=CH-CH₂-O-(CH₂CH₂O)₂₄-(CH₂CH(CH₃)O)₂₅-H

und 0,3 g der oben beschriebenen Karstedt-Katalysatorlösung (Pt-Gehalt = 1,0 Gew.-%) dosiert. Nach insgesamt 3 Stunden Reaktionszeit ist der Aktivwasserstöff (Si-gebundene Wasserstoff) vollständig umgesetzt. Nach Abkühlen auf 25°C wird ein klares, sehr viskoses Produkt mit 18.400 mPa.s bei 25°C erhalten. Die freien Kettenende sind mit linearen Polyetherketten modifiziert.

### Vergleichsversuch (Polymer 2):

Es wurde als Polymer 2 ein handelsübliches unverzweigtes Polyether-Polysiloxan-Copolmeres mit einer Viskosität von 800 mPa·s bei 25°C und einem Trübungspunkt von 30°C verwendet.

Vergleichsversuch (**Polymer 3**) gemäß EP-A 1 076 073:

Es wurde als Polymer 3 ein Polymer entsprechend Beispiel B3 aus EP-A 1 076 073 verwendet.

### (C) Herstellung und Prüfung der Entschäumerformulierungen

### Prüfung der Wirksamkeit (Schwarzlaugentest) :

400 ml Schwarzlauge (Hardwood aus der Verarbeitung von Birken) wurden in einem 1 1 Messzylinder mit Waschflaschenaufsatz 15 Minuten mit einem Thermostat auf 80°C temperiert. Nach Zugabe von 10 mg siliziumorganischen Polymeren (die Summe von Siliconentschäumer A und Polyether-Polysiloxan-Copolymer B) in Form der hergestellten Entschäumformulierung wurde die Schwarzlauge mit einer Geschwindigkeit von 2,3 l/min umgepumpt, immer dann (insgesamt 3 mal), wenn im Messzylinder eine Schaumhöhe von 30 cm erreicht war, wurden sofort 5 mg Silicon zugegeben (insgesamt 25 mg Silicon). Es wurde die Zeit t zwischen dem Beginn des Testes und dem Zeitpunkt nach der letzten Zugabe, wenn der Schaum erneut auf 30 cm gestiegen war, gemessen.
Je länger dieser Zeitraum t ist, desto wirksamer ist der Entschäumer.

### Beispiele 1 bis 3 (C11, C12, C13) sowie Vergleichsversuche 1 und 2 (CV11 und CV12) :

Die Herstellung der erfindungsgemäßen Entschäumerformulierungen C11, C12, C13 und der Entschäumerformulierungen CV11 und CV12 gemäß Vergleichsversuchen erfolgte durch einfaches Mischen von 90 Teilen des in der Tabelle angegebenenen Siliconentschäumers und 10 Teilen des in der Tabelle angegebenen Polyether-Polysiloxan-Copolymers mit einem Labordissolver. Zur Prüfung wurde eine Mischung aus 20 Teilen dieser Entschäumerformulierung und 80 Teilen eines Gemisches aus aliphatischen Kohlenwasserstoffen einer Viskosität von 3 mm²/s und einem Flammpunkt > 100 °C mit einem Labordissolver bei 1.000 min⁻¹ hergestellt.

Die Ergebnisse der Prüfung der Wirksamkeit sind in der Tabelle zusammengefasst.

### Beispiele 4 bis 6 (C21, C22 und C23) und Vergleichsversuche 3 bis 5 (CV21, CV22 und CV23) :

Zur Herstellung der erfindungsgemäßen Entschäumerformulierungen C21, C22 und C23 und der Entschäumerformulierungen CV21, CV22 und CV23 gemäß Vergleichsversuchen wurden 20 Teile des in der Tabelle angegebenen Siliconentschäumers, 5 Teile Sorbitanmonostearat, 5 Teile Polyoxyethylen(40)stearat, und 5 Teile des in der Tabelle angegebenen Polyether-Polysilbxan-Copolymers bei 70°C vermischt. 10 Teile reiner 1%igen Lösung von Xanthan-Gum, konserviert mit 0,5 % Formaldehyd, wurden mit einem Flächenrührer bei 600 min⁻¹ eingerührt. Innerhalb von 3 Minuten wurden portionsweise 55 Teile Wasser zugegeben und 15 min bei 1.000 min⁻¹ nachgerührt.
Die Ergebnisse der Prüfung der Wirksamkeit sind in der Tabelle zusammengefasst.

### Beispiele 7 bis 9 (C31, C32 und C33) und Vergleichsversuche 6 und 7 (CV31 und CV32):

Zur Herstellung der erfindungsgemäßen Entschäumerformulierungen C31, C32 und C33 sowie der Entschäumerformulierungen CV31 und CV32 gemäß Vergleichsversuchen wurden 20 Teile des in der Tabelle angegebenen Siloxanentschäumers, 4 Teile Polyoxyethylen(4)stearat und 2 Teile Polyoxyethylen(40)stearat, bei 70°C vermischt. Innerhalb von 10 Minuten wurden portionsweise 69 Teile Wasser zugegeben. In die erhaltenen Emulsion wurden abschließend 5 Teile des in der Tabelle angegebenen Polyether-Polysiloxan-Copolymers gegeben und 15 Minuten bei 1.000 min⁻¹ nachgerührt.
Die Ergebnisse der Prüfung der Wirksamkeit sind in der Tabelle zusammengefasst.

**Tabelle: Rezeptur und Prüfergebnisse der Entschäumerformulierungen**

| **Beispiel bzw. Vergleichsversuch** | **Siliconentschäumer** | **Polyether-Polysiloxan-Copolymer** | **Schwarzlaugentest, t in s** |
|---|---|---|---|
| C11 | A1 | Polymer 1 | 3580 |
| C12 | A2 | Polymer 1 | 4670 |
| C13 | A3 | Polymer 1 | 5240 |
| CV11 nicht erfindungsgemäß | A3 | Polymer 2 | 450 |
| CV12 nicht erfindungsgemäß | A3 | Polymer 3 | 1560 |
| C21 | A1 | Polymer 1 | 3280 |
| C22 | A2 | Polymer 1 | 4900 |
| C23 | A3 | Polymer 1 | 6350 |
| CV21 nicht erfindungsgemäß | A1 | ohne | 410 |
| CV22 nicht erfindungsgemäß | A1 | Polymer 2 | 590 |
| CV23 nicht erfindungsgemäß | A1 | Polymer 3 | 720 |
| C31 | A1 | Polymer 1 | 4080 |
| C32 | A2 | Polymer 1 | 5030 |
| C33 | A3 | Polymer 1 | 5980 |
| CV31 nicht erfindungsgemäß | A3 | ohne | 540 |
| CV32 nicht erfindungsgemäß | A3 | Polymer 3 | 2110 |

Die deutlich verbesserte Wirksamkeit der erfindungsgemäßen Entschäumerformulierungen gegenüber dem Stand der Technik (Vergleichsversuche) ist aufgrund der wesentlich höheren Werte für t offensichtlich.

Die Wiederholung der Entschäumerprüfung in einer Softwood-Schwarzlauge (Kiefer) bestätigte die überragende Wirksamkeit der erfindungsgemäßen Entschäumerformulierungen.

## Patentansprüche

1. Entschäumerformulierungen enthaltend
(A) Antischaummittel auf der Basis von Siloxanen und
(B) verzweigte Polyether-Polysiloxan-Copolymere enthaltend Strukturelemente der Formel
Y [-CₙH₂ₙ-(R₂SiO)ₘ-Aₚ-R₂Si-G]ₓ (I),
wobei
Y ein Rest der Formel 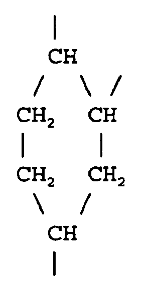 ist,
R gleich oder verschieden sein kann und einen einwertigen gegebenenfalls halogenierten Kohlenwasserstoffrest mit 1 bis 18 Kohlenstoffatomen je Rest bedeutet,
A einen Rest der Formel -R₂Si-R²-(R₂SiO)ₘ- bedeutet,
wobei R² ein zweiwertiger Kohlenwasserstoffrest mit 2 bis 30 Kohlenstoffatomen, der durch ein oder mehrere voneinander separate Sauerstoffatome unterbrochen sein kann, bedeutet,
G einen einwertigen Rest der Formel -C_{f}H_{2f-2k}-Z oder einen zweiwertigen Rest der Formel -CₙH₂ₙ-, wobei die zweite Bindung an einen weiteren Rest Y erfolgt, bedeutet,
Z einen Rest der Formel
-(R⁶)ᵥ-(OCH₂CH₂)ₐ[OCH₂CH(CH₃)]_{b}[OCH₂CH(CH₂CH₃)]_{c}-OR³, wobei R³ ein Wasserstoffatom oder einen Kohlenwasserstoffrest mit 1 bis 18 Kohlenstoffatomen oder einen Rest der Formel R-C(O)- (wobei R die oben dafür angegebene Bedeutung hat) bedeutet, R⁶ einen zweiwertigen Kohlenwasserstoffrest mit 1 bis 10 Kohlenstoffatomen bedeutet und
v 0 oder 1 ist, und
a, b und c 0 oder eine ganze Zahl zwischen 1 und 1000 ist,
mit der Maßgabe, dass die Summe aus (a+b+c) einen Wert von 2 bis 2000 hat, x 3 ist,
f eine ganze Zahl von 2 bis 12 ist,
k 0 oder 1 ist,
n eine ganze Zahl von 2 bis 12 ist,
m eine ganze Zahl von mindestens 1 ist,
p 0 oder eine ganze positive Zahl ist,
mit der Maßgabe, dass die verzweigten Polyether-Polysiloxan-Copolymere (B) durchschnittlich mindestens eine Gruppe Z enthalten.

2. Entschäumerformulierungen nach Anspruch 1, **dadurch gekennzeichnet, dass** die (B) verzweigte Polyether-Polysiloxan-Copolymere hergestellt werden,
indem in einem ersten Schritt
mindestens drei aliphatische Doppelbindungen aufweisende Verbindungen (1) der Formel
Y(CR¹=CH₂)ₓ
wobei Y und x die im Anspruch 1 dafür angegebene Bedeutung haben und
R¹ ein Wasserstoffatom oder einen Alkylrest mit 1 bis 10 Kohlenstoffatomen bedeutet
mit Organopolysiloxanen (2) der allgemeinen Formel
H(R₂SiO)ₘ-Aₚ-R₂SiH
wobei A, R, m und p die im Anspruch 1 dafür angegebene Bedeutung haben,
in Gegenwart von die Anlagerung von Si-gebundenem Wasserstoff an aliphatische Mehrfachbindung fördernden Katalysatoren (3), sogenanntem Hydrosilylierungskatalysator,
umgesetzt werden,
und in einem zweiten Schritt die so erhaltenen Si-gebundene Wasserstoffatome aufweisenden verzweigten Zwischenprodukte (5) mit organischen Verbindungen (4) der Formel
C_{f}H_{2f-2k-l}-Z
ausgewählt aus der Gruppe von
wenn k=0: H₂C=CR⁴-Z (4a) und
wenn k=1: R⁵C≡C-Z (4b)
wobei R⁴ und R⁵ die Bedeutung von R¹ haben,
f, k und Z die im Anspruch 1 dafür angegebene Bedeutung haben,
in Gegenwart von die Anlagerung von Si-gebundenem Wasserstoff an aliphatische Mehrfachbindung fördernden Katalysatoren (3),
umgesetzt werden.

3. Entschäumerformulierungen nach Anspruch 1 oder 2, **dadurch gekennzeichnet, dass** die Entschäumerformulierungen 0,1 bis 50 Gew.-% Polyether-Polysiloxan-Copolymere (B) enthalten.

4. Entschäumerformulierungen nach Anspruch 1, 2 oder 3,
**dadurch gekennzeichnet, dass** die Polyether-Polysiloxan-Copolymere (B) solche sind, bei denen
n den Wert 2,
p den Wert 0.

5. Entschäumerformulierungen nach Ansprüche 1 bis 4, **dadurch gekennzeichnet, dass** die Polyether-Polysiloxan-Copolymere (B) solche sind, bei denen
f den Wert 2,
k den Wert 0,
v den Wert 1 und
c den Wert 0 hat und
R⁶ ein Rest der Formel -CH₂- ist.

6. Entschäumerformulierungen nach einem der Anspruch 1 bis 5, **dadurch gekennzeichnet, dass** in den Polyether-Polysiloxan-Copolymeren (B) das Verhältnis von Endgruppen Z zu Verzweigungsgruppen Y 1,0 bis 2,0 beträgt.

7. Entschäumerformulierungen nach einem der Ansprüche 1 bis 6, **dadurch gekennzeichnet, dass** sie enthalten
(A) 1 bis 90 Gew-% Antischaummittel auf Basis von Siloxanen,
(B) 0,1 bis 50 Gew.-% verzweigte Polyether-Polysiloxan-Copolymeren der allgemeinen Formel (I)
(C) 0 bis 20 Gew.-% Emulgatoren
(D) 0 bis 97 Gew.-% Wasser,
jeweils bezogen auf das Gesamtgewicht der Entschäumerformulierungen,
und gegebenenfalls
(E) Konservierungsmittel, Verdicker und weitere Zusätze.

8. Entschäumerformulierungen nach einem der Ansprüche 1 bis 7, **dadurch gekennzeichnet, dass** sie Emulsionen sind enthaltend
(A) 5 bis 50 Gew.-% Antischaummittel auf Basis von Siloxanen,
(B) 0,1 bis 30 Gew.-% des Polyether-Polysiloxan-Copolymeren der allgemeinen Formel (I),
(C) 2 bis 20 Gew.-% eines Emulgators,
(D) 50 bis 95 Gew.-% Wasser
jeweils bezogen auf das Gesamtgewicht der Entschäumerformulierungen,
und gegebenenfalls
(E) Konservierungsmittel, Verdicker und weitere Zusätze.

9. Entschäumerformulierungen nach einem der Ansprüche 1 bis 8, **dadurch gekennzeichnet, dass** als Antischaummittel auf der Basis von Siloxanen eine Mischung aus Kieselsäure und Polyorganosiloxanen verwendet wird.

10. Entschäumerformulierungen nach einem der Ansprüche 1 bis 9, **dadurch gekennzeichnet, dass** die Polysiloxan-Polyether-Copolymere (B) gemeinsam mit dem Antischaummittel (A) emulgiert werden, oder die Polysiloxan-Polyether-Copolymere (B) nach der Herstellung einer Emulsion von dem Antischaummittel (A) der Antischaummittelemulsion direkt oder in Form einer Emulsion zugesetzt werden.

11. Verwendung von Entschäumerformulierungen nach einem der Ansprüche 1 bis 10 zum Entschäumen von bei der Zellstoffherstellung anfallenden wässrigen Medien.

## Claims

1. Antifoam formulation comprising
(A) antifoam agent based on siloxanes and
(B) branched polyether/polysiloxane copolymers comprising structural elements of the formula
Y[-CₙH₂ₙ-(R₂SiO)ₘ-Aₚ-R₂Si-G]ₓ (I)
in which
Y is a radical of the formula 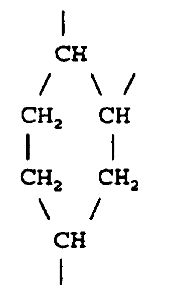
R may be identical or different and are a monovalent, optionally halogenated hydrocarbon radical having 1 to 18 carbon atoms per radical,
A is a radical of the formula -R₂Si-R²-(R₂SiO)ₘ-,
in which R² is a divalent hydrocarbon radical which has 2 to 30 carbon atoms and may be interrupted by one or more separate oxygen atoms,
G is a monovalent radical of the formula -C_{f}H_{2f-2k}-Z or a divalent radical of the formula -CₙH₂ₙ-, in which the second bond is to a further radical Y,
Z is a radical of the formula -(R⁶)ᵥ-(OCH₂CH₂)ₐ[OCH₂CH(CH₃)]_{b}[OCH₂CH(CH₂CH₃) ]_{c}-OR³,
in which R³ is a hydrogen atom or a hydrocarbon radical having 1 to 18 carbon atoms or a radical of the formula R-C(O)-(in which R has the meaning stated above therefor),
R⁶ is a divalent hydrocarbon radical having 1 to 10 carbon atoms and
v is 0 or 1, and
a, b and c are 0 or an integer between 1 and 1000,
with the proviso that the sum (a+b+c) has a value of from 2 to 2000,
x is 3,
f is an integer from 2 to 12,
k is 0 or 1,
n is an integer from 2 to 12,
m is an integer of at least 1, and
p is 0 or a positive integer,
with the proviso that the branched polyether/polysiloxane copolymers (B) contain on average at least one group Z.

2. Antifoam formulation according to Claim 1, **characterized in that** the branched polyether/polysiloxane copolymers (B) are prepared by a procedure in which, in a first step, compounds (1) having at least three aliphatic double bonds and of the formula
Y(CR¹=CH₂)ₓ
in which Y and x have the meaning stated therefor in Claim 1 and
R¹ is a hydrogen atom or an alkyl radical having 1 to 10 carbon atoms,
are reacted with organopolysiloxanes (2) of the general formula
H(R₂SiO)ₘ-Aₚ-R₂SiH
in which A, R, m and p have the meaning stated therefor in Claim 1,
in the presence of catalysts (3) promoting the addition of Si-bound hydrogen at an aliphatic multiple bond, so-called hydrosilylation catalyst, and, in a second step, the branched intermediates (5) thus obtained and having Si-bound hydrogen atoms are reacted with organic compounds (4) of the formula
C_{f}H_{2f-2k-1}-Z
selected from the group of
if k=0_{:} H₂C=CR⁴-Z (4a) and
if k=1: R⁵C/C-Z (4b)
in which R⁴ and R⁵ have the meaning of R¹, f, k and Z have the meaning stated therefor in Claim 1,
in the presence of catalysts (3) promoting the addition of Si-bound hydrogen at an aliphatic multiple bond.

3. Antifoam formulation according to Claim 1 or 2, **characterized in that** the antifoam formulation contains from 0.1 to 50% by weight of polyether/polysiloxane copolymers (B).

4. Antifoam formulation according to Claim 1, 2 or 3, **characterized in that** the polyether/polysiloxane copolymers (B) are those in which
n has the value 2,
p has the value 0.

5. Antifoam formulation according to Claims 1 to 4, **characterized in that** the polyether/polysiloxane copolymers (B) are those in which
f has the value 2,
k has the value 0,
v has the value 1 and
c has the value 0 and
R⁶ is a radical of the formula -CH₂-.

6. Antifoam formulation according to any of Claims 1 to 5, **characterized in that**, in the polyether/polysiloxane copolymer (B), the ratio of terminal groups Z to branching groups Y is from 1.0 to 2.0.

7. Antifoam formulation according to any of Claims 1 to 6, **characterized in that** it comprises
(A) from 1 to 90% by weight of antifoam agent based on siloxanes,
(B) from 0.1 to 50% by weight of branched polyether/polysiloxane copolymers of the general formula (I),
(C) from 0 to 20% by weight of emulsifiers,
(D) from 0 to 97% by weight of water, based in each case on the total weight of the antifoam formulation,
and optionally
(E) preservatives, thickeners and further additives.

8. Antifoam formulation according to any of Claims 1 to 7, **characterized in that** it is an emulsion comprising
(A) from 5 to 50% by weight of antifoam agent based on siloxanes,
(B) from 0.1 to 30% by weight of the polyether/polysiloxane copolymer of the general formula (I),
(C) from 2 to 20% by weight of an emulsifier,
(D) from 50 to 95% by weight of water, based in each case on the total weight of the antifoam formulation,
and optionally
(E) preservatives, thickeners and further additives.

9. Antifoam formulation according to any of Claims 1 to 8, **characterized in that** a mixture of silica and polyorganosiloxanes is used as the antifoam agent based on siloxanes.

10. Antifoam formulation according to any of Claims 1 to 9, **characterized in that** the polysiloxane/polyether copolymers (B) are emulsified together with the antifoam agent (A), or the polysiloxane/polyether copolymers (B) are added to the antifoam emulsion directly or in the form of an emulsion after the preparation of an emulsion of the antifoam agent (A).

11. Use of an antifoam formulation according to any of Claims 1 to 10 for defoaming aqueous media obtained in pulp production.

## Revendications

1. Formulations démoussantes, contenant :
(A) un agent anti-mousse à base de siloxanes et
(B) des copolymères de polyéther-polysiloxane ramifiés contenant des éléments structuraux de formule
Y[-CₙH₂ₙ-(R₂SiO)ₘ-Aₚ-R₂Si-G]ₓ (I)
dans laquelle
Y est un radical de formule 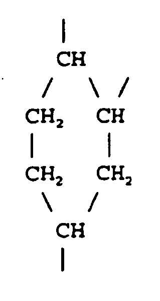 les R peuvent être identiques ou différents et signifient un radical hydrocarboné monovalent éventuellement halogéné de 1 à 18 atomes de carbone par radical,
A signifie un radical de formule -R₂Si-R²-(R₂SiO)ₘ-, R² signifiant un radical hydrocarboné bivalent de 2 à 30 atomes de carbone, qui peut être interrompu par un ou plusieurs atomes d'oxygène séparés les uns des autres,
G signifie un radical monovalent de formule -C_{f}H_{2f-2k}-Z ou un radical bivalent de formule -CₙH₂ₙ-, la seconde liaison ayant lieu sur un autre radical Y,
Z signifie un radical de formule
- (R⁶)ᵥ-(OCH₂CH₂)ₐ[OCH₂CH(CH₃)]_{b}[OCH₂CH(CH₂CH₃)]_{c}-OR³
R³ signifiant un atome d'hydrogène ou un radical hydrocarboné de 1 à 18 atomes de carbone ou un radical de formule R-C(O)- (R ayant la signification donnée précédemment),
R⁶ signifiant un radical hydrocarboné bivalent de 1 à 10 atomes de carbone, et
v représentant 0 ou 1, et
a, b et c représentant 0 ou un nombre entier compris entre 1 et 1 000,
à condition que la somme de (a+b+c) ait une valeur de 2 à 2 000,
x représente 3,
f est un nombre entier de 2 à 12,
k représente 0 ou 1,
n est un nombre entier de 2 à 12,
m est un nombre entier d'au moins 1,
p représente 0 ou un nombre entier positif,
à condition que les copolymères de polyéther-polysiloxane ramifiés (B) contiennent en moyenne au moins un groupe Z.

2. Formulations démoussantes selon la revendication 1, **caractérisées en ce que** les copolymères de polyéther-polysiloxane ramifiés (B) sont fabriqués par
lors d'une première étape, la mise en réaction de composés (1) comprenant au moins trois doubles liaisons aliphatiques de formule
Y (CR¹= CH₂)ₓ
Y et x ayant la signification donnée dans la revendication 1 et
R¹ signifiant un atome d'hydrogène ou un radical alkyle de 1 à 10 atomes de carbone,
avec des organopolysiloxanes (2) de formule générale
H(R₂SiO)ₘ-Aₚ-R₂SiH
A, R, m et p ayant la signification donnée dans la revendication 1,
en présence de catalyseurs (3) favorisant l'addition d'hydrogène relié à Si sur une liaison multiple aliphatique, dits catalyseur d'hydrosilylation,
et lors d'une seconde étape, la mise en réaction des produits intermédiaires ramifiés (5) comprenant des atomes d'hydrogène reliés à Si ainsi obtenus avec des composés organiques (4) de formule
C_{f}H_{2f-2k-1}-Z
choisis dans le groupe constitué par
lorsque k = 0 : H₂C=CR⁴-Z (4a) et
lorsque k = 1 : R⁵C≡C-Z (4b)
R⁴ et R⁵ ayant la signification de R¹,
f, k et Z ayant la signification donnée dans la revendication 1,
en présence de catalyseurs (3) favorisant l'addition d'hydrogène relié à Si sur une liaison multiple aliphatique.

3. Formulations démoussantes selon la revendication 1 ou 2, **caractérisées en ce que** les formulations démoussantes contiennent 0,1 à 50 % en poids de copolymères de polyéther-polysiloxane (B).

4. Formulations démoussantes selon la revendication 1, 2 ou 3, **caractérisées en ce que** les copolymères de polyéther-polysiloxane (B) sont tels que n ait la valeur 2,
p ait la valeur 0.

5. Formulations démoussantes selon les revendications 1 à 4, **caractérisées en ce que** les copolymères de polyéther-polysiloxane (B) sont tels que f ait la valeur 2,
k ait la valeur 0,
v ait la valeur 1 et
c ait la valeur 0, et
R⁶ soit un radical de formule -CH₂-.

6. Formulations démoussantes selon l'une quelconque des revendications 1 à 5, **caractérisées en ce que**, dans les copolymères de polyéther-polysiloxane (B), le rapport entre les groupes terminaux Z et les groupes de ramification Y est de 1,0 à 2,0.

7. Formulations démoussantes selon l'une quelconque des revendications 1 à 6, **caractérisées en ce qu'**elles contiennent :
(A) 1 à 90 % en poids d'un agent anti-mousse à base de siloxanes,
(B) 0,1 à 50 % en poids de copolymères de polyéther-polysiloxane ramifiés de formule générale (I),
(C) 0 à 20 % en poids d'émulsifiants,
(D) 0 à 97 % en poids d'eau,
à chaque fois par rapport au poids total des formulations démoussantes,
et éventuellement
(E) des conservateurs, des épaississants et des additifs supplémentaires.

8. Formulations démoussantes selon l'une quelconque des revendications 1 à 7, **caractérisées en ce qu'**elles sont des émulsions contenant :
(A) 5 à 50 % en poids d'un agent anti-mousse à base de siloxanes,
(B) 0, 1 à 30 % en poids de copolymères de polyéther-polysiloxane ramifiés de formule générale (I),
(C) 2 à 20 % en poids d'un émulsifiant,
(D) 50 à 95 % en poids d'eau,
à chaque fois par rapport au poids total des formulations démoussantes,
et éventuellement
(E) des conservateurs, des épaississants et des additifs supplémentaires.

9. Formulations démoussantes selon l'une quelconque des revendications 1 à 8, **caractérisées en ce qu'**un mélange de silice et de polyorganosiloxanes est utilisé en tant qu'agent anti-mousse à base de siloxanes.

10. Formulations démoussantes selon l'une quelconque des revendications 1 à 9, **caractérisées en ce que** les copolymères de polysiloxane-polyéther (B) sont émulsifiés avec l'agent anti-mousse (A) ou les copolymères de polysiloxane-polyéther (B) sont ajoutés directement ou sous la forme d'une émulsion à l'émulsion d'agent anti-mousse après la fabrication d'une émulsion de l'agent anti-mousse.

11. Utilisation de formulations démoussantes selon l'une quelconque des revendications 1 à 10 pour le démoussage de milieux aqueux formés lors de la fabrication de cellulose.
